# EUROPÄISCHE PATENTANMELDUNG

(11) **EP 2 101 039 A1**
(43) Veröffentlichungstag der Anmeldung: **16.09.2009**
(21) Anmeldenummer: 08004494.4
(22) Anmeldetag: 11.03.2008
(51) Int. Cl.: E21B 43/38, H02J 3/00, F01D 15/10

(54) **Unterbrechungsfreier Betrieb und Energieversorgung einer Sauergasrückführungsanlage**

(71) Anmelder: SIEMENS AKTIENGESELLSCHAFT, 80333 München (DE)
(72) Erfinder: Kleiner, Fritz, 81827 München (DE); Speith, Markus, 63654 Büdingen (DE); Tomschi, Ulrich, Dr., 91077 Neunkirchen am Brand (DE)

(57) **Zusammenfassung**

Die Erfindung betrifft eine Gasrückführungsanlage (1) und ein Verfahren zum unterbrechungsfreien Betrieb einer Gasrückführungsanlage (1), umfassend einen Energieerzeugungsteil (2), einen Übertragungsteil (3), einen Injektionsteil (4) und eine Regeleinrichtung (5), wobei der Energieerzeugungsteil (2) eine Anzahl von Turbosätzen (6) und der Injektionsteil (4) mindestens einen Turboverdichter (7) und einen an den Turboverdichter (7) angekoppelten Antriebsmotor (8) zum elektrischen Antrieb des Turboverdichters (7) mit einem elektrischen Nennbedarf aufweisen, der Übertragungsteil (3) die im Energieerzeugungsteil (2) erzeugte Leistung dem Injektionsteil (4) zur Verfügung stellt und die Regeleinrichtung (5) mit dem Energieerzeugungsteil (2) und dem Injektionsteil (4) verbunden ist, wobei über die Regeleinrichtung (5) im Normalbetrieb die für den Nennbedarf erforderliche Leistung durch den Teil- oder Volllastbetrieb aller Turbosätze (6) bereitstellbar ist, wobei die Anzahl der Turbosätze (6) die Mindestanzahl übersteigt, die notwendig ist, den kontinuierlichen Betrieb des Injektionsteils (4) sicherzustellen.

## Beschreibung

Die Erfindung betrifft eine Gasrückführungsanlage, insbesondere eine Sauergasrückführungsanlage, und bezieht sich auf die Bereitstellung elektrischer Energie für den unterbrechungs- und emissionsfreien Betrieb einer solchen Gasrückführungsanlage. Die Erfindung betrifft ferner ein Verfahren zum unterbrechungs- und emissionsfreien Betrieb einer Gasrückführungsanlage.

Als Sauergas bezeichnet man H2S-haltiges Rohgas, das bei der Erdölförderung als Begleitgas (engl. associated gas) anfällt, oder als Erdgas mit einem Anteil von >1% v.V. H2S (Schwefelwasserstoff) direkt aus dem Bohrloch strömt. In höheren Konzentrationen ist H2S absolut tödlich für Lebewesen. Deshalb presst man dieses hochgiftige Begleitgas sofort nach der Abtrennung vom Erdöl-/Erdgasförderstrom unter sehr hohem Druck (>600 bar) zurück in ehemalige Lagerstätten zum endgültigen Verbleib. Während der Verweildauer des Sauergases an der Oberfläche muss jede Leckage vermieden werden und Wartungsarbeiten an Sauergasverdichtern und deren Antrieben und Rohrleitungen müssen absolut minimiert sein.

Hochleistungs-Turboverdichter für die Komprimierung von Sauergas werden normalerweise durch Gasturbinen angetrieben, die im Vergleich mit Elektromotoren wartungsaufwändiger sind und beim (Wieder)Anfahren der Verdichter u.U. eine Druckentlastung derselben erfordern.

Gattungsmäßige Nachteile solcher Anlagen sind Sicherheitsrisiken bei den erforderlichen regelmäßigen Wartungsarbeiten an den Gasturbinen, schwieriges An- oder Wiederanfahren der Verdichter mit Einwellengasturbinen, sowie die direkte Abhängigkeit der Größe und der Leistung der Verdichter von den typgeprüften Gasturbinen selbst, deren Wellenleistung wiederum von täglich schwankenden oder saisonal sich ändernden Umgebungsbedingungen abhängt.

Zur Vermeidung dieser Nachteile können die Sauergasverdichter durch wartungsfreie drehzahlgeregelte Elektromotoren angetrieben werden. Ein von einer Gas- oder Dampfturbine angetriebener elektrischer Generator außerhalb des gefährlichen Injektionsanlage liefert dann die elektrische Energie für diese Motoren; vorgeschaltete statische Frequenzumrichter erlauben einen sanften Anlauf und drehzahlgeregelten Betrieb bei optimierten Verdichterdrehzahlen.

In Kraftwerken, die einer elektrisch angetriebenen Sauergas-Injektionsanlage vorgeschaltet sind, kommen üblicherweise mit Erdgas befeuerte Gasturbinen sowie ggf. Dampfturbinen zum Einsatz, um über die angekuppelten Generatoren die elektrische Energie bereitzustellen, die von den motorgetriebenen Verdichtern benötigt wird. In der Regel werden diese Kraftwerke im reinen Inselbetrieb ohne Anbindung an das öffentliche Netz gefahren.

Die US 7 114 351 B2 beschreibt eine Anlage zur Bereitstellung der elektrischen Leistung für die Antriebe der Turboverdichter eines LNG-Prozesses. Hierbei wird in einem ersten Schritt die elektrische Leistung für den Prozess der Verflüssigung gasförmiger leichter Kohlenwasserstoffe aus einer Quelle bereitgestellt und in einem zweiten Schritt ein Kältemittel in einem Turboverdichter verdichtet, der durch einen Elektromotor angetrieben wird, unter Verwendung der im ersten Schritt erzeugten elektrischen Leistung.

Elektromotoren liefern ihre Nennleistung unter verschiedenen Betriebsbedingungen, was in der in der US 7 114 351 B2 beschriebenen Anwendung einen Dauerbetrieb der Kältemittelverdichter ermöglicht, selbst bei wechselnden Umgebungsbedingungen, unterschiedlichem Gas, oder unterschiedlichen Lufteingangstemperaturen an den Gasturbinen. Die US 7 114 351 B2 führt weiter aus, dass eine plötzlich ausfallende Gasturbine durch eine oder auch mehrere zusätzliche Gasturbinen im Standby, bzw. einen oder auch mehrere zusätzliche Turbosätze im Standby, ersetzt werden könne. Der Nachteil dieser Methode ist aber, dass der LNG-Produktionsprozess dann aber bereits unterbrochen ist und es einige Stunden dauert, bis der betroffene Turboverdichter wieder angefahren und stabilisiert ist. Man hat also insbesondere Unterbrechungen bzw. Stillstandszeiten in Kauf zu nehmen.

Aufgabe der Erfindung ist daher die Angabe einer hochverfügbaren Gasrückführungsanlage sowie eines Verfahrens für den unterbrechungsfreien Betrieb einer Gasrückführungsanlage.

Erfindungsgemäß wird die auf den unterbrechungsfreien Betrieb einer Gasrückführungsanlage gerichtete Aufgabe gelöst durch eine Gasrückführungsanlage, umfassend einen Energieerzeugungsteil, einen Übertragungsteil, einen Injektionsteil und eine Regeleinrichtung, wobei der Energieerzeugungsteil eine Anzahl von Turbosätzen und der Injektionsteil mindestens einen Turboverdichter und einen an den Turboverdichter angekoppelten Antriebsmotor zum elektrischen Antrieb des Turboverdichters aufweisen, der Übertragungsteil die im Energieerzeugungsteil erzeugte Leistung dem Injektionsteil zur Verfügung stellt und die Regeleinrichtung mit dem Energieerzeugungsteil und dem Injektionsteil verbunden ist, wobei über die Regeleinrichtung im Normalbetrieb die für den Nennbedarf erforderliche Leistung durch den Teil- oder Volllastbetrieb aller Turbosätze bereitstellbar ist, und die Anzahl der Turbosätze die Mindestanzahl übersteigt, die notwendig ist, den kontinuierlichen Betrieb des Injektionsteils sicherzustellen.

Die Erfindung beruht demnach auf dem Gedanken, einen zusätzlichen Turbosatz, gemessen am Gesamt-Leistungsbedarf der Verdichtungsanlage, dem n+1 Prinzip folgend, zu installieren. Dieser Turbosatz ist kein Standby-Turbosatz. Alle zum Betrieb der Verdichtungsanlage notwendigen Turbosätze, einschließlich dem n+1ten Turbosatz, arbeiten im ungestörten bzw. Normalzustand der Anlage im Teillastbetrieb, d.h. es wird jeweils so viel rotierende Reserve vorgehalten, dass der Ausfall eines Turbosatzes regelungstechnisch ausgeglichen werden kann. Dabei können einer oder mehrere designierte Turbosätze die Frequenzregelung übernehmen und alle operativen Turbosätze werden im Normalfall gleichmäßig belastet. Bei Schutzabschaltungen ("trip") einer Turbine oder eines Generators entscheidet eine Regeleinrichtung (dynamischer Lastrechner), ob Maßnahmen zur Stabilisierung des Inselnetzes eingeleitet werden müssen oder nicht.

Der für den Betrieb der Gasrückführungsanlage schwerwiegendste zu erwartende Fehler ist der ungeplante Ausfall eines Turbosatzes im Energieerzeugungsteil, also im Inselkraftwerk - Schutzabschaltungen von Verdichterantrieben sind in ihren Auswirkungen untergeordnet und bei Notabschaltungen in der Prozessanlage kann der Betrieb unter Umständen nicht aufrechterhalten werden. Prinzipiell kann aber auch eine partielle Notabschaltung (ESD, "emergency shut down") in der Prozessanlage in den Algorithmus des dynamischen Lastrechners mit einbezogen werden.

Die damit prinzipiell mögliche unterbrechungsfreie Betriebsdauer der Gasrückführungsanlage wird durch Wegfall notwendiger Wartungsarbeiten an den üblicherweise verwendeten Verdichter-Gasturbinen von bisher einem auf mehr als fünf Jahre erhöht, sofern die Hochdruckverdichter selbst diesen Wartungsintervallen angepasst werden. Einer Erreichung von 365 interventionsfreien Betriebstagen pro Jahr stehen dann nur noch ungeplante (Stör-)Abschaltungen entgegen, die aber nicht notwendigerweise die Anwesenheit von Personal vor Ort erfordern.

Durch geeignete Auslegung der Antriebsanlagen können die Turboverdichter nach einer prozessbedingten Abschaltung innerhalb von wenigen Minuten wieder angefahren werden. Der (Wieder-) Anfahrvorgang erfolgt dann ohne die Verdichter zu enlasten und ohne Giftgas freizusetzen.

Bei entsprechender Auslegung des speisenden Inselkraftwerks und Integration der beteiligten Automatisierungssysteme (z. B. Kraftwerk, Stromrichterantriebe, Verdichter) kann die Produktion des Injektionsteils auch während der Störabschaltung eines Generators im Kraftwerk unterbrechungsfrei aufrechterhalten werden.

Das Personengefährdungspotenzial wird durch Vermeidung von Wartungsarbeiten und Eliminierung von Brenngaseinrichtungen und Heißteilen im Giftgas- und explosionsgefährdeten Prozessbereich reduziert.

Im erfinderischen Verfahren zum unterbrechungsfreien Betrieb einer Gasrückführungsanlage, umfassend einen Energieerzeugungsteil, einen Übertragungsteil, einen Injektionsteil und eine Regeleinrichtung, wobei der Energieerzeugungsteil eine Anzahl von Turbosätzen und der Injektionsteil mindestens einen Turboverdichter und einen an den Turboverdichter angekoppelten Antriebsmotor zum elektrischen Antrieb des Turboverdichters mit einem elektrischen Nennbedarf aufweisen, der Übertragungsteil die im Energieerzeugungsteil erzeugte Leistung dem Injektionsteil zur Verfügung stellt, und die Regeleinrichtung mit dem Energieerzeugungsteil und dem Injektionsteil verbunden ist, wird im Normalbetrieb die für den Nennbedarf erforderliche Leistung durch den Teil- oder Volllastbetrieb aller Turbosätze bereitgestellt, wobei die Anzahl der Turbosätze die Mindestanzahl übersteigt, die notwendig ist, den kontinuierlichen Betrieb des Injektionsteils sicherzustellen.

Vorteilhafterweise werden alle zum Betrieb des Injektionsteils notwendigen Turbosätze im Normalbetrieb des Injektionsteils bzw. der Gasrückführungsanlage bei Teillast betrieben.

Vorzugsweise werden alle operativen Generatoren im Normalfall gleichmäßig belastet werden.

Damit die Regeleinrichtung schnell und exakt arbeitet, ist es zweckmäßig, dass die Regeleinrichtung kontinuierlich Informationen aus der Kraftwerksleittechnik des Energieerzeugungsteils und aus der Verdichterleittechnik des Injektionsteils erhält.

Ein unterbrechungsfreier Betrieb des Injektionsteils lässt sich am ehesten dadurch erreichen, dass die Turbosätze so betrieben werden, dass eine vorgehaltene positive oder negative Leistungsreserve den Ausfall der größten Turbomaschine deckt, wobei die positive Leistungsreserve den Ausfall eines Generators deckt und die negative Leistungsreserve den Ausfall eines Motor-Verdichterstrangs des Injektionsteils.

Bei Ausfall eines Turbosatzes wird vorzugsweise die Verdichterantriebsdrehzahl abgesenkt, wenn eine zuvor bestimmte gesamte positive Lastreserve kleiner ist, als die erbrachte Leistung des Turbosatzes vor dem Ausfall. (Der quadratischen Lastkennlinie der Turboverdichter folgend, reduziert sich die von den Elektromotoren aufgenommene Leistung mit der dritten Potenz der Drehzahl).

Wird auch durch die Reduzierung der Verdichterantriebsdrehzahl der aktuelle Energiebedarf des Injektionsteils nicht gedeckt, ist es zweckmäßig, vorbestimmte elektrische Verbraucher der Gasrückführungsanlage abzuschalten ("load shedding").

Der weitestgehend unterbrechungsfreie Betrieb der übrigen Gasrückführungsanlage bei ungewollter Abschaltung von Großverbrauchern im Verdichtungsprozess oder beim Überschreiten der vorgegebenen Grenzwerte für die Netzfrequenz und deren zeitlicher Änderung, Spannung und cos phi im Energieversorgungsnetz der Gasrückführungsanlage kann dadurch sichergestellt werden, dass vorbestimmte Turbinen abgeschaltet werden.

Ist die negative Lastreserve kleiner als der Energiebedarf des größten Turboverdichters und fällt entweder ein Turboverdichter aus oder überschreiten die vorgegebenen Grenzwerte für die Netzfrequenz und deren zeitlicher Änderung, Spannung und cos phi im Energieversorgungsnetz der Gasrückführungsanlage eine vorgegebene Grenze, ist es zweckmäßig, vorbestimmte Turbinen abzuschalten.

Vorteilhafterweise umfasst der Injektionsteil der Gasrückführungsanlage ein Injektionsrohr oder eine Injektionssonde zum Verpressen von Sauergas unter hohem Druck in eine unterirdische Lagerstätte.

Die Erfindung wird beispielhaft anhand der Zeichnungen näher erläutert. Es zeigen schematisch und nicht maßstäblich:
- Figur 1: Sauergasinjektions-Anlagenkonzept
- Figur 2: Lastrechner-Algorithmus der Regeleinrichtung für die positive Lastreserve
- Figur 3: Lastrechner-Algorithmus der Regeleinrechnung für die Reduzierung der Drehzahl der Verdichtereinheiten
- Figur 4: Lastrechner-Algorithmus der Regeleinrichtung für die Abschaltung vorgewählter Turbinen
- Figur 5: Turbinenauslastung in konventionellem Energieerzeu- gungsteil einer Gasrückführungsanlage
- Figur 6: Turbinenauslastung im Energieerzeugungsteil einer Gasrückführungsanlage mit Standby-Turbine
- Figur 7: Turbinenauslastung im Energieerzeugungsteil einer Gasrückführungsanlage mit n+1 Turbinen im Teillastbe- trieb
- Figur 8: alternative Turbinenauslastung im Energieerzeugungs- teil einer Gasrückführungsanlage mit n+1 Turbinen

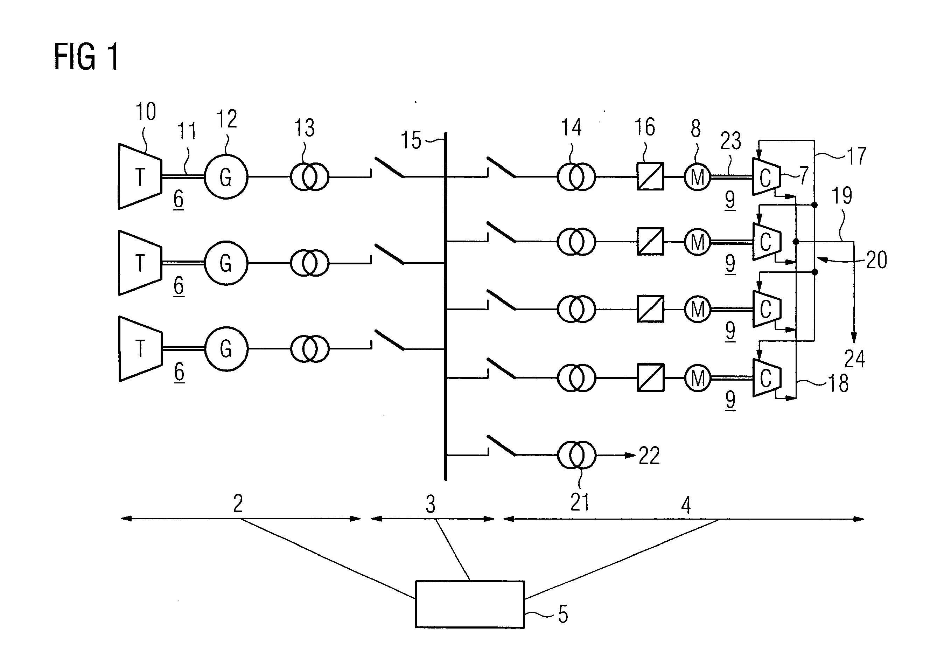

Die Figur 1 zeigt eine integrierte Lösung für eine Gasrückführungsanlage 1 mit einem Inselkraftwerk als Energieerzeugungsteil 2, einem Übertragungsteil 3 für die Verteilung der Energie, und einem Injektionsteil 4. Eine Regeleinrichtung 5
ist mit dem Energieerzeugungsteil 2, dem Übertragungsteil 3 und dem Injektionsteil 4 verbunden.

Der Energieerzeugungsteil 2 umfasst beispielhaft drei Turbosätze 6, mit jeweils einer Turbine 10 und einem Generator 12, die über eine Welle 11 verbunden sind.

Die Turbosätze 6 sind über jeweils einen elektrischen Transformator 13 mit der Kraftwerksstromschiene 15 des Übertragungsteils 3 verbunden, welcher die elektrische Energie den Motoren im Injektionsteil 4 und/oder anderen Verbrauchern 22 über einen Transformator 21 zur Verfügung stellt.

Im Injektionsteil 4 werden über Stromrichtertransformatoren 14 und Stromrichter 16 die drehzahlveränderbaren Elektromotoren 8 der Gasverdichter 7 angetrieben. Elektromotoren 8 und Gasverdichter 7 sind über Wellen 23 verbunden und bilden Motor-Verdichterstränge 9, die letztlich die Injektion des Sauergases über den Sammler 18 und die Druckleitung 19 in die ehemalige Lagerstätte bewirken. Das vom Erdöl-/Gasförderstrom abgetrennte Sauergas wird der Saugseite der Verdichter 7 über die Saugleitung 20 und über den Verteiler 17 zugeführt.

Die Figur 1 zeigt eine schematische Darstellung des Sauergas-Injektionspfads 18/19. Komprimiertes Sauergas wird von den Gasverdichtern 7 über Sammler 18 und Druckleitung 19 zu den Injektionsrohren bzw. Injektionssonden 24 transportiert. Das unter sehr hohem Druck in die Lagerstätten zurückgepresste Sauergas verbleibt dauerhaft im ehemaligen Reservoir.

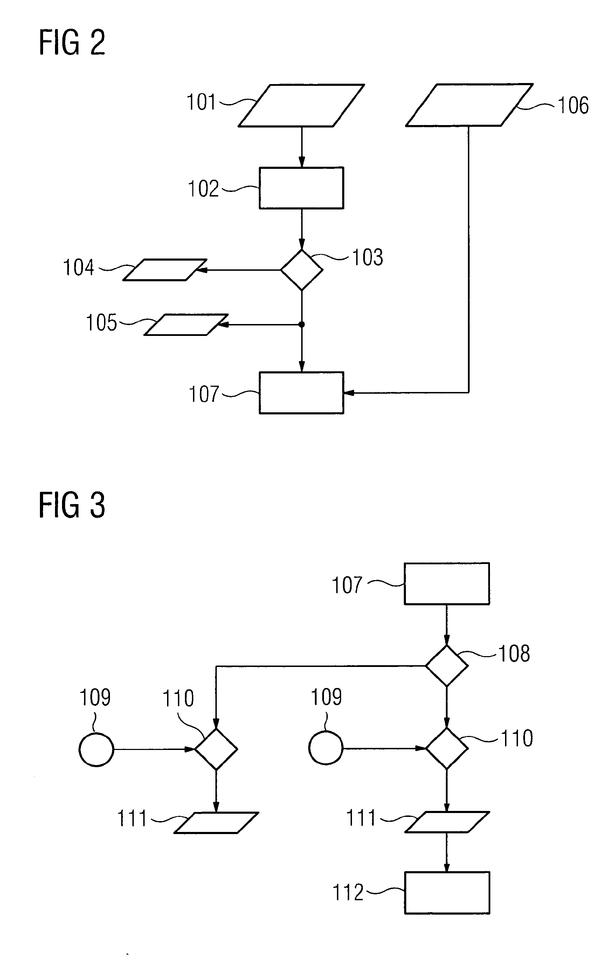

Figur 2 zeigt den Algorithmus eines Lastrechners der Regeleinrichtung 5 zur Steuerung des unterbrechungsfreien Betriebs einer Gasrückführungsanlage 1. Zur Beurteilung der Lastverhältnisse erhält der dynamische Lastrechner laufend Informationen 101 aus der Kraftwerksleittechnik. Die Informationen umfassen die momentan abgegebene Leistung jeder Gas- bzw. Dampfturbine, die momentan mögliche maximale Leistung jedes Gas- bzw. Dampfturbinensatzes und die momentan mögliche Mindestlast jeder Gas- bzw. Dampfturbine, ausgedrückt jeweils in elektrischer Generatorleistung. Anhand der abgegebenen Leistung und der momentan möglichen maximalen Leistung beziehungsweise anhand der abgegebenen Leistung und der momentan möglichen Mindestlast, lassen sich die positive bzw. negative Lastreserve bestimmen.

In einem ersten Schritt 102 berechnet der dynamische Lastrechner die insgesamt momentan verfügbare positive Lastreserve unter Einbeziehung verschiedener Parameter, wie z.B. der momentanen Umgebungstemperatur, der Luftfeuchte und des Brennwertes des Brenngases, die bereits in den Werten 101 aus der Kraftwerksleittechnik berücksichtigt sind.

In einem zweiten Schritt 103 vergleicht der dynamische Lastrechner die positive Lastreserve mit der Leistung des größten Turbosatzes 6. Reicht die gesamte positive Lastreserve auch bei Abschaltung eines Turbosatzes 6 aus, den Betrieb der Gasrückführungsanlage 1 aufrecht zu erhalten, meldet der dynamische Lastrechner an die Warten des Kraftwerks und des Injektionsteils den Zustand "n+1 verfügbar" 104. Erfolgt in diesem Zustand wirklich eine Schutzabschaltung im Kraftwerk, bleibt der dynamische Lastrechner passiv, und die Kraftwerksleittechnik stellt durch Umlastung der verbliebenen Generatoren 12 das Gleichgewicht zwischen verfügbarer und angeforderter Last wieder her.

Stellt der dynamische Lastrechner fest, dass die momentan verfügbare positive Leistungsreserve nicht ausreicht, um den möglichen Ausfall eines Turbosatzes 6 zu kompensieren, meldet er den Alarmzustand "n+1 nicht verfügbar" 105 prophylaktisch an die Warten.

Dies ermöglicht es dem Bedienpersonal eventuell stillgesetzte Leistungsreserven (z.B. durch Wartungsarbeiten) zu mobilisieren, oder die Belastung des Netzes zu reduzieren, z.B. durch Abschaltung anderer Verbraucher 22, und damit ggf. einer Injektionsunterbrechung bei Ausfall eines Turbosatzes 6 vorzubeugen. Auch manuelle Umlastungen zwischen den operativen Turbosätzen 6 und Änderungen im Prozessdampfverbrauch sind dazu geeignet.

Wird die prophylaktische Lastreduzierung nicht vom Bedienpersonal des Injektionsteils initiiert, z.B. durch Abschaltung unwichtiger Verbraucher 22 oder temporärer Reduktion der Nennkapazität, kann der dynamische Lastrechner eingreifen, indem er die Drehzahl aller operativen Verdichterantriebe temporär auf einen Wert absenkt, der die Stabilität des Verdichters noch sicherstellt und damit die Unterbrechungsfreiheit der Injektion gewährleistet. Hierzu wird die aus der Verdichterleittechnik erhaltene Information 106 zu den momentan möglichen Lastreduzierungen durch Senkung der Verdichter-Drehzahl, ohne die Stabilität des Verdichterbetriebs zu gefährden, kontinuierlich verarbeitet und die Summe der möglichen Lastreduzierung der einzelnen Verdichtereinheiten zur positiven Lastreserve addiert 107. Die dadurch erzielte gesamte Leistungsreserve deckt dann möglicherweise den Ausfall eines Turbosatzes 6.

Im Alarmzustand "n+1 nicht verfügbar" kann also das Gleichgewicht zwischen positiver und negativer Lastreserve durch eine Absenkung der Verdichterantriebsdrehzahl wieder hergestellt werden. Da dieser Vorgang sehr schnell erfolgen kann, wird er vom dynamischen Lastrechner nur ausgelöst, wenn im Alarmzustand wirklich eine Schutzabschaltung im Kraftwerk erfolgt.

Der zugehörige Algorithmus ist in Figur 3 gezeigt. Wie bereits erläutert, bezeichnet 107 die Summe aus der positiven Lastreserve der Turbosätze 6 und der möglichen Lastreduzierung infolge einer Reduzierung der Drehzahl der Verdichtereinheiten. In einem nächsten Schritt 108 werden die positive Lastreserve und die mögliche Lastreduzierung mit der momentan verfügbaren Leistung des größten Turbosatzes 6 verglichen. Unabhängig vom Ergebnis des Vergleichs ist bei Ausfall 109 einer Turbine die Konjunktion 110 wahr und die Drehzahl der Verdichtereinheiten wird verringert 111. Ist die Summe aus positiver Lastreserve und möglicher Lastreduzierung kleiner als die Leistung des größten oder zumindest betroffenen Turbosatzes 6, erfolgt zusätzlich ein Lastabwurf 112.

Neben der rechnerischen Ermittlung der Differenz zwischen positiver und negativer Lastreserve kann eine unabhängige Bestimmung der Netzfrequenz-Änderungsgeschwindigkeit (df/dt) dazu benutzt werden, eine plötzliche Veränderung der Lastverhältnisse zu erkennen - ohne Rücksicht auf deren Ursache. Die Frequenz-Änderungsgeschwindigkeit ist proportional zum jeweiligen Lastsprung und kann somit zur Bestimmung der notwendigen Schutzabschaltungen verwendet werden.

Da eine Frequenzänderung eine direkte Konsequenz des auslösenden Ereignisses ist, und die Bestimmung der Änderungsgeschwindigkeit mehr Zeit benötigt als eine Schutzauslösung über die direkten Abschaltsignale, würde eine Aktion aus der errechneten Frequenzänderung ggf. zu spät kommen. Deshalb kann diese Funktion als Backup zur beschriebenen direkten Abschaltung angesehen werden. Außerdem muss sichergestellt sein, dass Aktionen, die aus der rechnerischen Ermittlung der Unterfrequenz resultieren, keine Fehlauslösungen verursachen.

Reichen die beschriebenen Maßnahmen zum Ausgleich des Unterschieds zwischen positiver und negativer Lastreserve nicht aus, initiiert der dynamische Lastrechner eine Kette von vorprogrammierten Lastabwürfen bei Erreichen von vordefinierten Unterfrequenzschwellen, um ein weiteres Absenken der Netzfrequenz - und damit einer Schutzabschaltung des gesamten Kraftwerks - vorzubeugen. Die im Lastrechner hinterlegten Verbraucher, die ggf. zeitweise abgeschaltet werden können, ohne die Injektion zu unterbrechen, werden so schnell und im notwendigen Umfang vom Netz getrennt, wie es die Aufrechterhaltung der Netzfrequenz erfordert.

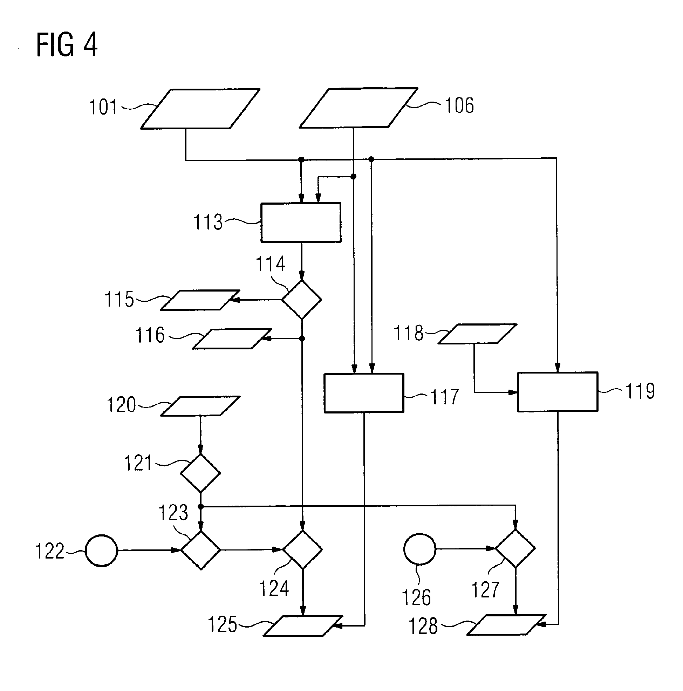

Prinzipiell ist der auf die ungeplante Abschaltung von Turbosätzen 6 angewendete Algorithmus auch anwendbar auf die ungeplante Abschaltung großer Verbraucher, vor allem der großen Verdichterantriebe. Die Kraftwerks- und Maschinenleittechnik ist so ausgelegt, dass sie Lastabwürfe dieser Größenordnung ohne Mitwirkung des dynamischen Lastrechners ausregeln kann. Figur 4 zeigt das Prinzip.

Ist die Summe der durch Frequenzregelung erreichbaren negativen Lastreserve größer als der größte anzunehmende Lastabwurf durch Abschaltung von Verdichterantrieben, greift der dynamische Lastrechner nicht ein. Andernfalls wird ein vorgewählter Turbosatz 6 abgeschaltet und die resultierende positive Lastreserve gleicht die verbleibende Lücke aus.

113 bezeichnet hierbei die Berechnung der negativen Lastreserve und die Bestimmung der Verdichtereinheiten mit der größten Last. Im Schritt 114 werden diese beiden Werte verglichen. Ist die negative Lastreserve größer als die größere Last der Verdichtereinheiten, meldet der Rechner "n+1 verfügbar" 115. Im anderen Fall meldet er "n+1 nicht verfügbar" 116.

Anhand der Daten aus der Kraftwerksleittechnik 101 sowie der Verdichterleittechnik 106 erfolgt eine Zuordnung 117 von Turbosätzen 6 und Verdichtereinheiten. Mithilfe dieser Zuordnung werden vorgewählte Turbinen 10 abgeschaltet, wenn die negative Lastreserve kleiner ist 114 als der Energiebedarf der größten Verdichtereinheiten und 124 entweder eine Verdichtereinheit ausfällt 122 oder 123 die Frequenzänderungsgeschwindigkeit 120 im Energieversorgungsnetz der Gasrückführungsanlage 1 eine vorgegebene Grenze überschreitet 121.

Bei noch größeren Lastabwürfen 126, z.B. im Falle von partiellen Notabschaltungen aus dem Prozess, müssen ggf. mehrere Turbosätze 6 vom Netz genommen werden 128. Sind der Ablauf und die Größe 118 einer solchen Notabschaltung bekannt, kann auch ein solcher Vorgang vom Lastrechner prinzipiell gesteuert werden, z.B. indem eine Vorauswahl 119 abzuschaltender Turbinen 10 getroffen wird, um ggf. einen Teilprozess weiter betreiben zu können. Große Lastabwürfe 126 und das Überschreiten 121 einer Grenze der Frequenzänderungsgeschwindigkeit 120 sind im Sinne einer nicht-ausschließenden Disjunktion 127 miteinander verknüpft.

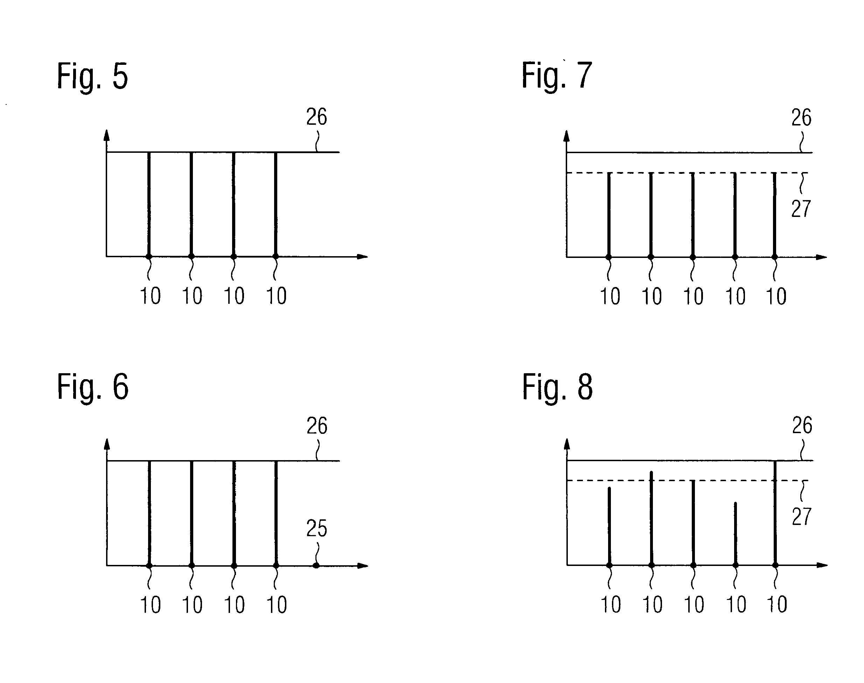

Figur 5 zeigt schematisch die Turbinenauslastung in einem konventionellen Energieerzeugungsteil einer Gasrückführungsanlage 1 im Nennbetrieb. Alle Turbinen 10 des Energieerzeugungsteils laufen unter nominaler Volllast 26. Der so betriebene Energieerzeugungsteil verfügt über keine positive Lastreserve, um bei Ausfall eines Turbosatzes 6 den unterbrechungsfreien Betrieb der kompletten Gasrückführungsanlage sicherstellen zu können.

Figur 6 zeigt schematisch die Turbinenauslastung, im in der US 7 114 351 B2 beschriebenen Energieerzeugungsteil einer Gasverflüssigungsanlage im Nennbetrieb. Die zusätzliche, im Standby bereitgehaltene Turbine 25, wird bei Ausfall einer anderen im Nennbetrieb der Gasrückführungsanlage unter Volllast laufenden Turbine 10 gestartet. Unterbrechungen und Stillstandszeiten im LNG-Produktionsprozess können bei Ausfall einer Turbine 10 die Folge sein und es kann einige Stunden dauern, bis der betroffene Kältemittelverdichter wieder angefahren und der Verflüssigungsprozess thermisch stabilisiert ist.

Figur 7 zeigt schematisch und beispielhaft die Turbinenauslastung im Energieerzeugungsteil 2 einer erfindungsgemäßen Gasrückführungsanlage 1 im Nennbetrieb für den Injektionsteil 4. Alle Turbinen 10 laufen unter Teillast 27. Es gibt keine Standby-Turbine 25. Die positive Lastreserve ist ausreichend, bei Ausfall einer Turbine 10 durch Erhöhen der Last der verbleibenden Turbinen 10 den unterbrechungsfreien Betrieb der Gasrückführungsanlage 1 sicherzustellen.

Figur 8 zeigt schematisch und beispielhaft eine alternative Turbinenauslastung im Energieerzeugungsteil 2 einer erfindungsgemäßen Gasrückführungsanlage 1 im Nennbetrieb für den Injektionsteil 4. Alle Turbinen 10 laufen unter Teil- oder Volllast 27,26. Auch hier gibt es keine Standby-Turbine 25. Die Auslastung der Turbinen 10 ist jedoch nicht notwendigerweise gleich. Beispielsweise kann, neben anderen Parametern, die Maschinenstandzeit der Turbinen 10 bei der Bestimmung der Auslastung maschinenspezifisch berücksichtigt werden.

## Patentansprüche

1. Eine Gasrückführungsanlage (1) umfassend einen Energieerzeugungsteil (2), einen Übertragungsteil (3), einen Injektionsteil (4) und eine Regeleinrichtung (5), wobei der Energieerzeugungsteil (2) eine Anzahl von Turbosätzen (6) und der Injektionsteil (4) mindestens einen Turboverdichter (7) und einen an den Turboverdichter (7) angekoppelten Antriebsmotor (8) zum elektrischen Antrieb des Turboverdichters (7) mit einem elektrischen Nennbedarf aufweisen, der Übertragungsteil (3) die im Energieerzeugungsteil (2) erzeugte Leistung dem Injektionsteil (4) zur Verfügung stellt und die Regeleinrichtung (5) mit dem Energieerzeugungsteil (2) und dem Injektionsteil (4) verbunden ist, **dadurch gekennzeichnet, dass** über die Regeleinrichtung (5) im Normalbetrieb die für den Nennbedarf erforderliche Leistung durch den Teil- oder Volllastbetrieb aller Turbosätze (6) bereitstellbar ist, wobei die Anzahl der Turbosätze (6) die Mindestanzahl übersteigt, die notwendig ist, den kontinuierlichen Betrieb des Injektionsteils (4) sicherzustellen.

2. Die Gasrückführungsanlage (1) nach Anspruch 1, wobei über die Regeleinrichtung (5) im Normalbetrieb die für den Nennbedarf erforderliche Leistung durch den Teillastbetrieb aller Turbosätze (6) bereitstellbar ist.

3. Die Gasrückführungsanlage (1) nach Anspruch 1 oder 2, wobei eine maximale Abgabeleistung aller Turbosätze (6) den Nennbedarf um mindestens die maximale Abgabeleistung des Turbosatzes (6) mit der größtmöglichen Abgabeleistung übersteigt.

4. Die Gasrückführungsanlage (1) nach einem der vorhergehenden Ansprüche, wobei das Gas ein Sauergas ist.

5. Die Gasrückführungsanlage (1) nach einem der vorhergehenden Ansprüche, wobei mindestens zwei Turboverdichter (7) vorgesehen sind, mit jeweils einem Antriebsmotor (8).

6. Die Gasrückführungsanlage (1) nach einem der vorhergehenden Ansprüche, wobei die Drehzahl der Antriebsmotoren (8) variabel ist.

7. Die Gasrückführungsanlage (1) nach einem der vorhergehenden Ansprüche, wobei der Energieerzeugungsteil (2) eine Gasturbinenanlage mit einer Anzahl von Gas-Turbosätzen (6) ist.

8. Die Gasrückführungsanlage (1) nach einem der vorhergehenden Ansprüche, wobei der Energieerzeugungsteil (2) eine Gas-und Dampfturbinenanlage ist, mit einer Anzahl von Gasturbinen (10) und Dampfturbinen (10).

9. Die Gasrückführungsanlage (1) nach einem der vorhergehenden Ansprüche, wobei der Injektionsteil ein Injektionsrohr (24) umfasst.

10. Die Gasrückführungsanlage (1) nach einem der vorhergehenden Ansprüche, wobei die Gasrückführungsanlage (1) eine Sauergasrückführungsanlage ist.

11. Ein Verfahren zum unterbrechungsfreien Betrieb einer Gasrückführungsanlage (1) umfassend einen Energieerzeugungsteil (2), einen Übertragungsteil (3), einen Injektionsteil (4) und eine Regeleinrichtung (5), wobei der Energieerzeugungsteil (2) eine Anzahl von Turbosätzen (6) und der Injektionsteil (4) mindestens einen Turboverdichter (7) und einen an den Turboverdichter (7) angekoppelten Antriebsmotor (8) zum elektrischen Antrieb des Turboverdichters (7) mit einem elektrischen Nennbedarf aufweisen, der Übertragungsteil (3) die im Energieerzeugungsteil (2) erzeugte Leistung dem Injektionsteil (4) zur Verfügung stellt und die Regeleinrichtung (5) mit dem Energieerzeugungsteil (2) und dem Injektionsteil (4) verbunden ist, **dadurch gekennzeichnet, dass** im Normalbetrieb die für den Nennbedarf erforderliche Leistung durch den Teil- oder Volllastbetrieb aller Turbosätze (6) bereitgestellt wird, wobei die Anzahl der Turbosätze (6) die Mindestanzahl übersteigt, die notwendig ist, den kontinuierlichen Betrieb des Injektionsteils (4) sicherzustellen.

12. Verfahren nach Anspruch 11, wobei im Normalbetrieb der Gasrückführungsanlage (1) alle Turbosätze (6) bei Teillast betrieben werden.

13. Verfahren nach Anspruch 11 oder 12, wobei alle operativen Generatoren (12) im Normalbetrieb gleichmäßig belastet werden.

14. Verfahren nach einem der Ansprüche 11 bis 13, wobei eine Regeleinrichtung (5) kontinuierlich Informationen aus einer Kraftwerksleittechnik (101) und aus einer Verdichterleittechnik (106) erhält.

15. Verfahren nach einem der Ansprüche 11 bis 14, wobei die Turbosätze (6) so betrieben werden, dass eine vorgehaltene positive oder negative Leistungsreserve den Ausfall der größten Turbomaschine deckt.

16. Verfahren nach einem der Ansprüche 11 bis 15, wobei als Turbomaschine ein Turbosatz (6) verwendet wird.

17. Verfahren nach einem der Ansprüche 11 bis 16, wobei als Turbomaschine ein Motor-Verdichterstrang (9) des Injektionsteils (4) verwendet wird.

18. Verfahren nach einem der Ansprüche 11 bis 17, wobei eine Verdichterantriebsdrehzahl bei Ausfall eines Turbosatzes (6) abgesenkt wird, wenn eine zuvor bestimmte gesamte positive Lastreserve kleiner ist, als die erbrachte Leistung des Turbosatzes (6) vor dem Ausfall.

19. Verfahren nach einem der Ansprüche 11 bis 18, wobei vorbestimmte elektrische Verbraucher der Gasrückführungsanlage (1) abgeschaltet werden, wenn nach Ausfall eines Turbosatzes (6) auch durch die Reduzierung der Verdichterantriebsdrehzahl die aktuelle Leistung der Turbosätze (6) den aktuellen Energiebedarf des Injektionsteils (4) nicht deckt.

20. Verfahren nach einem der Ansprüche 11 bis 17, bei dem vorbestimmte Turbinen (10) abgeschaltet werden, wenn Teilanlagen aus dem Injektionsprozess abgeschaltet werden oder die Frequenzänderungsgeschwindigkeit im Energieversorgungsnetz der Gasrückführungsanlage (1) einen vorgegebenen Grenzwert überschreitet.

21. Verfahren nach einem der Ansprüche 11 bis 17, bei dem vorbestimmte Turbinen (10) abgeschaltet werden, wenn die negative Lastreserve kleiner ist als der Energiebedarf des größten Turboverdichters (7) und entweder ein Turboverdichter (7) ausfällt oder die Frequenzänderungsgeschwindigkeit im Energieversorgungsnetz der Gasrückführungsanlage (1) eine vorgegebene Grenze überschreitet.

22. Verfahren nach einem der Ansprüche 11 bis 21, bei dem Gas über ein Injektionsrohr (24) unter hohem Druck in eine unterirdische Lagerstätte gepresst wird.

23. Verfahren nach einem der Ansprüche 11 bis 22, bei dem das Gas ein Sauergas ist.
